**Europäisches Patentamt**

**European Patent Office**

**Office européen des brevets**

(19)

(11) **EP 0 911 671 B1**

(12) **FASCICULE DE BREVET EUROPEEN**

(45) Date de publication et mention
de la délivrance du brevet:
**29.08.2001 Bulletin 2001/35**

(51) Int Cl.⁷: **G02C 7/02**

(21) Numéro de dépôt: **98402532.0**

(22) Date de dépôt: **13.10.1998**

(54) **Lentille ophtalmique multifocale**

Multifokale ophthalmische Linse

Multifocal ophthalmic lens

(84) Etats contractants désignés:
**BE CH DE ES GB IE IT LI NL PT**

(30) Priorité: **16.10.1997 FR 9712987**

(43) Date de publication de la demande:
**28.04.1999 Bulletin 1999/17**

(73) Titulaire: **ESSILOR INTERNATIONAL
COMPAGNIE GENERALE D'OPTIQUE
94227 Charenton cédex (FR)**

(72) Inventeurs:
• **Pedrono, Claude
91640 Briis sous Forges (FR)**
• **Harsigny, Christian
91330 Yerres (FR)**
• **Fauquier, Catherine
94500 Champigny sur Marne (FR)**

• **Jurkiewiez, Fanny
94800 Noiseau (FR)**
• **Roland, Eric
77176 Savigny le Temple (FR)**

(74) Mandataire: **Desrousseaux, Grégoire Marie
Cabinet HIRSCH-DESROUSSEAUX-POCHART,
34 rue de Bassano
75008 Paris (FR)**

(56) Documents cités:
**EP-A- 0 738 911        GB-A- 2 261 527
GB-A- 2 273 369**

• **GUILINO G H: "DESIGN PHILOSOPHY FOR
PROGRESSIVE ADDITION LENSES" APPLIED
OPTICS, vol. 32, no. 1, 1 janvier 1993, pages
111-117, XP000331309**

## Description

La présente invention a pour objet une lentille ophtalmique.

Les lentilles ophtalmiques multifocales . progressives sont maintenant bien connues. Elles sont utilisées pour corriger la presbytie et permettent au porteur des lunettes d'observer des objets dans une large gamme de distances, sans avoir à retirer ses lunettes. De telles lentilles comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne principale de progression traversant ces trois zones. Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

EP-A-0 702 257 décrit une lentille ophtalmique, présentant une première surface, une seconde surface au-dessus de la première surface, et une troisième surface en-dessous de la première surface; la première surface inclut un point de lecture; la deuxième surface est une surface avec une puissance inférieure à la puissance de lecture de la première surface; la troisième surface est une surface avec une puissance supérieure à la puissance de lecture de la première surface. L'invention permet notamment une lecture de bas en haut, sans nécessiter d'accommodation. Cette lentille ne présente en fait pas une zone de vision de près avec un point de référence, mais deux zones de vision de près, avec deux points de référence.

Les porteurs ont généralement des difficultés à s'adapter aux lentilles progressives. De ce fait, une proportion des presbytes pour qui de telles lentilles progressives pourraient être prescrites ne les adoptent pas. Il s'agit notamment des jeunes presbytes emmétropes, ou des presbytes ayant une faible amétropie. Ces porteurs se satisfont de verre unifocaux, ou de verres bifocaux. Ces trois solutions ne sont pas satisfaisantes, car elles n'offrent pas de correction en vision intermédiaire et ne sont pas esthétiques.

Il a été proposé, voir l'article l'Opticien Lunetier d'avril 1988, une lentille commercialisée par la demanderesse sous la marque Essilor Delta, qui soit plus simple à utiliser et facile à supporter qu'une lentille progressive, et qui soit attirante pour la population des presbytes non équipée de lentilles progressives. Ce verre est décrit dans la demande de brevet FR-A-2 588 973. Il présente une partie centrale qui équivaut au verre unifocal que l'on utiliserait normalement pour corriger la presbytie, de sorte à assurer une vision de près satisfaisante. Ce verre présente en outre une légère décroissance de puissance dans la partie supérieure, qui assure au porteur une vision nette aussi au delà du champ habituel de vision de près. Le verre présente un point à une valeur de puissance égale à la puissance nominale de vision de près, une zone de puissance plus élevée dans la partie inférieure du verre, et une zone de puissance plus faible dans la partie supérieure du verre.

Ce verre présente des inconvénients; il provoque des problèmes en vision dynamique, du fait d'une puissance trop importante en vision de près, et d'une puissance trop faible en vision intermédiaire, pour les consignes de montage préconisées. En périphérie, le verre présente un astigmatisme important; la zone de progression entre la partie centrale et la partie supérieure présente une largeur réduite.

L'invention propose une solution à ces problèmes. Elle propose une lentille adaptée, qui soit plus facile à supporter que les lentilles ophtalmiques classiques, et soit d'une prescription plus simple. Elle permet d'asurer au porteur les avantages d'un verre unifocal en vision de près, avec en outre une vision intermédiaire.

L'invention assure aux porteurs une zone de vision de près stabilisée et plus importante, une augmentation significative des largeurs de champs en vision de près et dans la partie supérieure du verre en vision intermédiaire, ainsi qu'une réduction des aberrations et notamment de l'astigmatisme. Elle assure une correction appropriée pour des distances entre 40 et 80 cm, et dans la plupart des cas, pour des distances entre 40 cm et 2 m. L'invention propose donc une solution bien adaptée à l'usage courant des ordinateurs.

Plus précisément, l'invention propose une lentille ophtalmique, présentant une face asphérique ayant un centre géométrique, un point de référence pour la vision de près, et en chaque point une valeur de sphère moyenne et une valeur de cylindre, une méridienne sensiblement ombilique verticale, et dans laquelle l'aire formée des points dont la distance au centre géométrique est inférieure à 20 mm, et dont la valeur de cylindre est comprise entre une première valeur et une deuxième valeur est supérieure à l'aire formée des points dont la distance au centre géométrique est inférieure à 20 mm, et dont la valeur de cylindre est inférieure à ladite première valeur,

la première valeur valant le produit d'une constante sensiblement égale à 0,42 par la différence $\Delta$ de sphère moyenne entre le point de référence pour la vision de près et le centre géométrique de la lentille, la seconde valeur valant le produit d'une constante sensiblement égale à 0,84 par la différence $\Delta$ de sphère moyenne entre le point de référence pour la vision de près et le centre géométrique de la lentille.

Dans un mode de réalisation, l'aire formée des points dont la distance au centre géométrique est inférieure à 20 mm, et dont la valeur de cylindre est supérieure à ladite deuxième valeur, est d'une surface inférieure à 1/20 de l'aire formée des points dont la distance au centre géométrique est inférieure à 20 mm.

Avantageusement, le cylindre est inférieur à 0,12 dioptries pour les points de la méridienne dont l'ordonnée ou distance verticale par rapport au centre géométrique de la lentille est comprise entre -20 mm et +20 mm.

La sphère moyenne est de préférence une fonction décroissante de l'ordonnée sur au moins une ligne verticale de la lentille, au dessus du point de référence pour la vision de près, et en particulier pour une ligne verticale passant par le centre optique de la lentille.

Dans un mode de réalisation, l'aire formée des points dont la distance au centre géométrique est inférieure à 20 mm, et dont la valeur de cylindre est comprise entre lesdites première et deuxième valeurs est supérieure à 800 mm$^2$, lorsque la différence $\Delta$ de sphère moyenne entre le point de référence pour la vision de près et le centre géométrique de la lentille est de l'ordre de 0,60 dioptries.

Dans un autre mode de réalisation, le point de référence pour la vision de près est situé sur la lentille à moins de 11 mm en dessous du centre géométrique de la lentille, et de préférence à 10 mm en dessous du centre géométrique de la lentille.

Avantageusement, l'aire S formée des points dont la distance au centre géométrique est inférieure à 20 mm, et dont la valeur de cylindre est comprise entre lesdites première et deuxième valeurs est comprise entre 780 et 880 mm$^2$.

De préférence, dans un cercle de diamètre de 8 mm centré sur le point de référence pour la vision de près, la valeur du cylindre en chaque point est inférieure à 0,37 dioptries.

On peut aussi prévoir que dans un cercle de diamètre de 8 mm centré sur le point de référence pour la vision de près, la variation de la sphère moyenne est inférieure à 0,25 dioptries.

Dans un mode de réalisation, la valeur absolue du gradient de la sphère moyenne sur la surface asphérique est inférieure au produit d'une constante $k_S$ par la différence $\Delta$ de sphère moyenne entre le point de référence pour la vision de près et le centre géométrique de la lentille, ladite constante $k_S$ présentant une valeur comprise entre 0,10 et 0,15 mm$^{-1}$, et de préférence égale à 0,14 mm$^{-1}$.

Dans un autre mode de réalisation, la valeur absolue du gradient du cylindre sur la surface asphérique est inférieure au produit d'une constante kc par la différence $\Delta$ de sphère moyenne entre le point de référence pour la vision de près et le centre géométrique de la lentille, ladite constante kc présentant une valeur comprise entre 0,18 et 0,22 mm$^{-1}$, et de préférence égale à 0,21 mm$^{-1}$.

Les points de la face asphérique dont la distance au centre géométrique est inférieure à 20 mm et qui sont situés en dessous d'une ligne horizontale passant à 4 mm sous le centre géométrique de la lentille présentent avantageusement un cylindre inférieur à ladite deuxième valeur.

Les lignes formées des points de la face asphérique dont l'ordonnée ou distance verticale au centre géométrique de la lentille est supérieure à 8 mm, et dont la valeur de cylindre est égale à ladite première valeur peuvent être sensiblement parallèles. Avantageusement, ces lignes sont sensiblement verticales.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation graphique de divers paramètres surfaciques sur l'axe des ordonnées d'une lentille selon l'invention;
- figure 2 une représentation graphique des lignes d'isocylindre sur la surface de la lentille selon l'invention;
- figure 3 une représentation graphique des lignes de sphère moyenne sur la surface de la lentille selon l'invention;
- figure 4 une représentation graphique d'autres lignes d'isocylindre sur la surface de la lentille selon l'invention;
- figure 5 une représentation en trois dimensions des pentes de sphère sur la surface de la lentille selon l'invention;
- figure 6 une représentation en trois dimensions des pentes de cylindre sur la surface de la lentille selon l'invention.

Dans toute la suite de la description, on utilise sur la surface de la lentille un système de coordonnées cartésiennes, avec un repère orthonormé; l'axe des abscisses est formé par l'horizontale passant par le centre géométrique de la lentille; l'axe des ordonnées est formé par la verticale passant par le centre géométrique de la lentille, et est orienté vers le haut.

De façon connue en soi, en tout point d'une surface asphérique, on définit une sphère moyenne D donnée par la formule:

$$D = \frac{n-1}{2} \left( \frac{1}{R_1} + \frac{1}{R_2} \right)$$

où $R_1$ et $R_2$ sont les rayons de courbure maximal et minimal exprimés en mètres, et n l'indice du matériau constituant la lentille.

On définit aussi un cylindre C, donné par la formule:

$$C = (n-1) \cdot \left| \frac{1}{R_1} - \frac{1}{R_2} \right|$$

$$= (n-1) \cdot |C_1 - C_2|$$

avec $C_1$ et $C_2$ les courbures maximale et minimale, en dioptries.

L'invention propose une lentille ophtalmique, destinée à être montée dans une monture de lunettes, et dont la face avant asphérique présente les caractéristiques décrites ci-dessous.

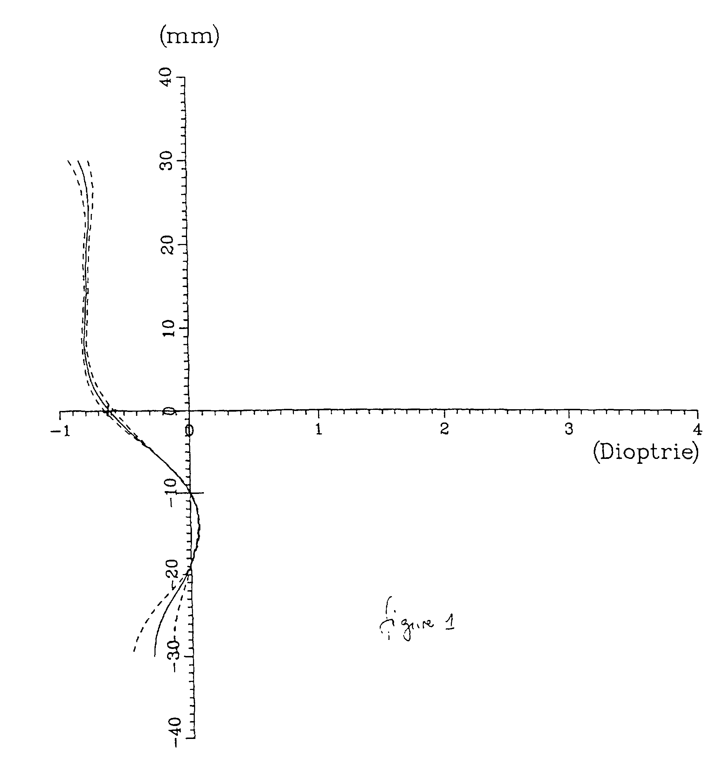

La figure 1 montre une représentation graphique de divers paramètres surfaciques sur l'axe des ordonnées d'une lentille selon l'invention; la figure 1 montre, en fonction de l'ordonnée sur le verre, qui est portée sur l'axe des ordonnées de la figure 1, la sphère moyenne, en traits pleins, et les courbures minimale et maximale $C_1$ et $C_2$, en trait interrompus. L'axe des abscisses de la figure 1 est gradué en dioptries, et normalisé, de sorte à obtenir pour la représentation graphique de la figure 1, une sphère moyenne nulle au point de contrôle ou de référence pour la vision de près.

Dans un mode de réalisation de l'invention, on prévoit que l'axe des ordonnées constitue une ligne sensiblement ombilique, avec un cylindre faible. Dans le mode de réalisation de la figure 1, le cylindre est inférieur à 0,12 dioptries pour des ordonnées comprises entre -20 mm et +20 mm. Cet axe constitue alors une ligne sensiblement ombilique, i.e. une méridienne; cette méridienne présente la propriété d'être verticale. Il n'est pas nécessaire pour la lentille selon l'invention de définir comme dans l'art antérieur une méridienne principale de progression de forme complexe. On peut simplement utiliser une telle méridienne verticale, dont les sphères moyennes sont représentées à la figure 1.

Dans un mode de réalisation avantageux de l'invention, on utilise pour fixer la puissance nécessaire en vision de près un point Vp de contrôle de la vision de près situé sur la lentille plus haut que pour un verre progressif classique. On peut utiliser un point d'ordonnée y supérieure à - 11 mm, et par exemple de l'ordre de -10 mm. On diminue ainsi l'ampleur des mouvements des yeux vers le bas, et on rend plus confortable le verre pour un travail sur écran d'ordinateur, en limitant les mouvements entre l'écran, le clavier, et les documents.

Dans la lentille de la figure 1, la sphère moyenne au point de contrôle de la vision de près est de 5,57 dioptries, et le cylindre est de 0,01 dioptrie.

L'invention propose de prévoir une décroissance de sphère moyenne vers le haut de la lentille, i. e. pour des ordonnées supérieures à celle du point de contrôle de la vision de près. Ainsi, pour une abscisse x donnée, et notamment pour une abscisse nulle x=0 correspondant à la méridienne, la sphère moyenne diminue lorsque l'ordonnée y croît.

On peut choisir une décroissance $\Delta$ de sphère moyenne entre le point Vp et le centre géométrique de la lentille de l'ordre de 0,60 dioptries, et une décroissance $\Theta$ totale de sphère moyenne sur la méridienne de la lentille de l'ordre de 0,80 dioptries, par rapport au point de contrôle de la vision de près. La plage de valeurs préférée pour la décroissance $\Delta$ de sphère moyenne entre le point de contrôle de la vision de près et le centre géométrique de la lentille est de [0,50; 1,20], en dioptries. La plage de valeurs préférée pour la décroissance $\Theta$ totale de sphère moyenne, entre le point Vp et un point quelconque de la méridienne est de [0,70; 1,60], en dioptries. Les couples de valeurs ($\Delta$, $\Theta$) actuellement préférés sont (0,60; 0,80) et (0,95; 1,30), en dioptries.

On constate sur la figure 1 que la sphère moyenne est sensiblement constante sur la partie supérieure de la lentille, i.e. sur la partie d'ordonnées positives. Dans cette zone, la sphère moyenne ne varie pas de plus de 0,30 dioptries. La sphère moyenne varie régulièrement pour les ordonnées comprises entre 0 et -10 mm; en dessous de cette valeur d'ordonnées, la sphère moyenne présente une valeur sensiblement constante. On assure ainsi la présence d'une zone autour du point $V_p$ dans laquelle la vision de près est satisfaisante, et au-dessus de cette zone, on fournit une diminution de sphère moyenne.

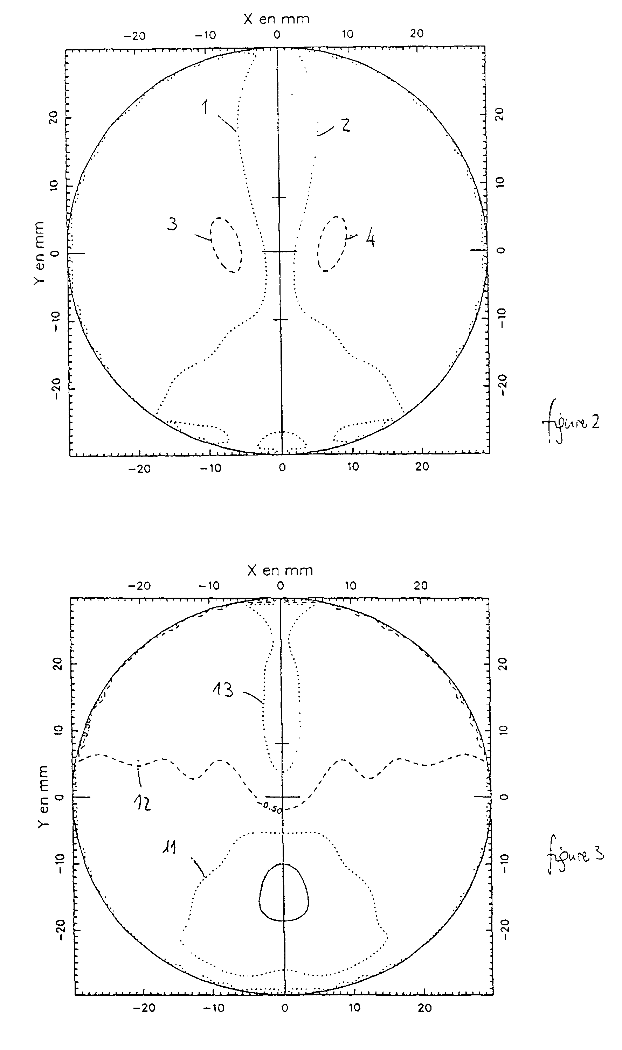

La figure 2 montre une représentation graphique des lignes d'isocylindre sur la surface de la lentille selon l'invention, i.e. la représentation graphique des lignes constituées de l'ensemble des points présentant un même cylindre; on a représenté sur la figure 2 les lignes 1 et 2 d'isocylindre 0,25 dioptries en traits interrompus courts, et les lignes 3 et 4 d'isocylindre 0,5 dioptries, en traits interrompus plus longs.

Dans la partie supérieure du verre, les lignes isocylindres à 0,25 dioptries sont sensiblement parallèles et verticales, i.e. parallèles à l'axe des ordonnées ou à la méridienne. Ainsi, dans l'exemple de la figure 2, les lignes 1 et 2 présentent une abscisse comprise respectivement dans les intervalles [-6, -4] et [4, 6] mm, pour tous les points d'ordonnée y supérieure à 8 mm, pour un diamètre de lentille de 40 mm.

Les lignes isocylindres à 0,50 dioptries enferment des surfaces de cylindre supérieur à 0,5 dioptries, qui se trouvent au voisinage de l'axe des abscisses, de part et d'autre de l'axe des ordonnées. La distance entre ces isocylindres, au voisinage du centre géométrique de la lentille, correspond sensiblement à la zone de vision intermédiaire, qui est plus étendue que dans un progressif classique.

L'invention propose d'accepter que la zone comprise entre les lignes d'isocylindre 0,25 dioptries, au moins dans la partie supérieure de la lentille, soit relativement réduite par rapport aux lentilles classiques; ceci peut se faire par exemple en prévoyant des lignes d'isocylindre parallèles, comme décrit ci-dessus. On arrive ainsi à minimiser les contraintes sur la surface du verre, et à fournir une surface d'isocylindre inférieure à 0,50 dioptries plus importante que dans les lentilles connues, et couvrant quasiment toute la surface de la lentille. La lentille de l'invention présente ainsi une grande surface de vision, et une douceur de progression qui la rend plus facile à accepter.

Quantitativement, cette caractéristique se traduit par une surface comprise entre les lignes d'isocylindre 0,25 et 0,50 de l'ordre de 830 $mm^2$ pour une len-

tille d'un diamètre de 40 mm, et pour une décroissance de sphère moyenne totale de 0,80 dioptries. En considérant la décroissance $\Delta$ de sphère moyenne entre le point Vp et le centre géométrique de la lentille, l'aire entre les lignes d'isocylindre 0,42.$\Delta$ et 0,84.$\Delta$ est comprise entre 780 et 880 mm$^2$, pour $\Delta$ entre 0,50 et 1,20 dioptries.

On remarque par ailleurs sur la figure 2 que les points dont le cylindre est supérieur à 0,50 dioptries sont situés sur la partie supérieure du verre, au dessus d'une droite horizontale. Plus précisément, les points de cylindre supérieur à 0,50 sont au dessus de la droite d'équation y = - 4 mm. Par ailleurs, les points de cylindre supérieur à 0,50 dioptries, ou plus généralement 0,84.$\Delta$, forment une aire inférieure à une valeur maximale, pour un diamètre de lentille de 40 mm. Cette aire correspond à moins de 1/20 de la surface totale de la lentille.

Pour une lentille, telle que celle de la figure 2, qui présente une décroissance $\Delta$ de 0,60 dioptries, et une décroissance $\Theta$ totale de sphère moyenne sur la méridienne de 0,80 dioptries par rapport au point de contrôle de la vision de près, l'invention propose ainsi, en termes relatifs, que l'aire de la lentille entre les lignes d'isocylindre 0,25 et 0,50 dioptries soit plus importante que l'aire délimitée par les lignes d'isocylindre 0,25 dioptries, et formée des points de cylindre inférieur à 0,25 dioptries. Cette caractéristique est clairement contradictoire avec l'enseignement de l'art antérieur, et notamment avec la pratique courante en matière de lentilles progressives.

Plus généralement, l'invention propose que l'aire de la lentille entre une ligne d'isocylindre 0,42.$\Delta$, ou 0,31.$\Theta$, d'une part, et une ligne d'isocylindre 0,84.$\Delta$, ou 0,62.$\Theta$, d'autre part, soit plus importante que l'aire délimitée par les lignes d'isocylindre 0,42.$\Delta$, ou 0,31.$\Theta$, et formée des points de cylindre inférieur à 0,42.$\Delta$ ou 0,31.$\Theta$ dioptries.

L'invention permet aussi d'obtenir une grande douceur de progression, qui se traduit par de faibles valeurs de pentes ou gradients de sphère et de cylindre. Le gradient ou la pente maximale pour le cylindre, dans la lentille de la figure 1, est de 0,125 dioptries/mm. Il est ainsi inférieur à 0,15, de préférence inférieur à 0,13 dioptries/mm. Le gradient ou la pente maximale pour la sphère, dans la lentille de la figure 1, est de 0,065 dioptrie/mm; il est ainsi inférieur à 0,1, et de préférence 0,07 dioptries/mm.

En outre, on peut avantageusement prévoir que la valeur absolue du gradient de la sphère moyenne sur la surface asphérique est inférieure au produit $k_S.\Delta$ d'une constante $k_S$ par la différence $\Delta$ de sphère moyenne entre le point de référence pour la vision de près et le centre géométrique de la lentille. Cette constante ks peut présenter une valeur comprise entre 0,10 et 0,15 mm$^{-1}$, et par exemple être sensiblement égale à 0,14 mm$^{-1}$.

On peut aussi prévoir que la valeur absolue du gradient du cylindre sur la surface asphérique est inférieure au produit $k_C.\Delta$ d'une constante kc par la différence $\Delta$ de sphère moyenne entre le point de référence pour la vision de près et le centre géométrique de la lentille. Cette constante $k_C$ peut présenter une valeur comprise entre 0,18 et 0,22 mm$^{-1}$, et par exemple être sensiblement égale à 0,21 mm$^{-1}$.

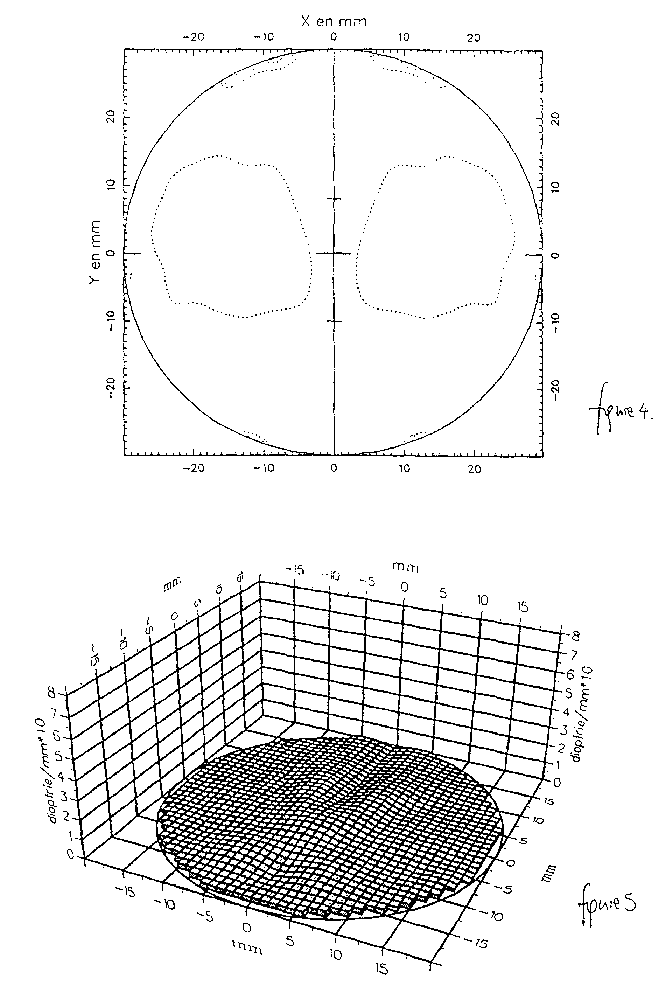

La figure 3 montre une représentation graphique des lignes d'isosphère sur la surface de la lentille selon l'invention, i.e. la représentation graphique des lignes constituées de l'ensemble des points présentant une même sphère moyenne, normalisée par rapport au point Vp; on a représenté sur la figure 3 la ligne 11 d'isosphère 0,25 dioptries en traits interrompus courts, i.e. la ligne des points présentant une sphère moyenne inférieure de 0,25 dioptries à celle du point Vp. On a aussi représenté, dans la partie supérieure du verre, la ligne 12 d'isocylindre 0,5 dioptries, en traits interrompus plus longs, la ligne 13 d'isocylindre 0,75 dioptries, en traits interrompus courts.

On constate que la ligne d'isosphère 0,5 dioptries est, pour les points de la surface situés à plus de 10 mm du centre géométrique du verre, asymptotique à une droite horizontale d'équation située au dessus du centre géométrique du verre. Quantitativement, la distance entre les points de la ligne 11 et la droite d'équation y = 4,5 mm est inférieure à 2 mm lorsque la distance au centre géométrique est supérieure à 10 mm.

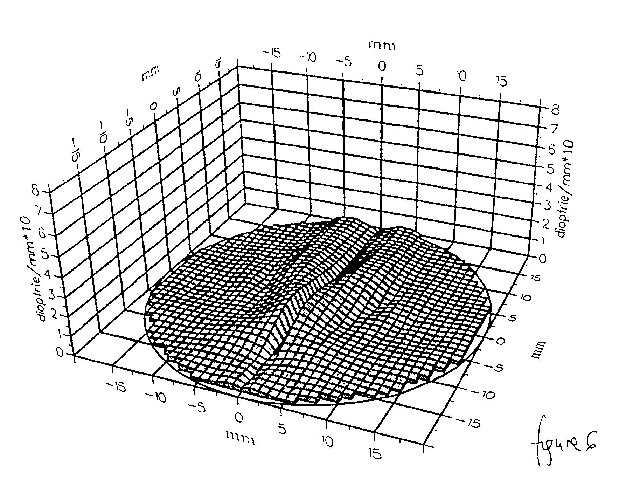

Dans la partie inférieure de la lentille, correspondant à la vision de près, il existe une zone de vision de près dans laquelle la variation de sphère est inférieure à 0,25 dioptries, et dans laquelle le cylindre est inférieur à 0,37 dioptries, comme on peut le voir à la figure 4. Cette zone dans laquelle la sphère moyenne est stabilisée assure une vision de près satisfaisante, et présente une surface supérieure à celle d'un cercle de diamètre supérieur à 8 mm centré sur le point de contrôle de la vision de près, d'ordonnée y = -10 mm.

La taille de cette zone de vision de près permet une bonne vision latérale, et permet notamment la lecture d'un document situé sur le côté. Ceci est aussi rendu possible par l'allure des isocylindres dans la partie supérieure de la lentille

La figure 4 montre, de façon analogue à la figure 2, une représentation graphique d'autres lignes d'isocylindre sur la surface de la lentille selon l'invention; on a représenté à la figure 4 les lignes d'isocylindre 0,37 dioptries. On reconnaît sur la figure 4 la zone centrée sur le point de contrôle de la vision de près et présentant un cylindre inférieur à 0,37 dioptries.

Les figures 5 et 6 montrent respectivement une représentation en trois dimensions des pentes de sphère et des pentes de cylindre sur la surface de la lentille selon l'invention. On reconnaît sur ces figures les bornes mentionnées plus haut.

La lentille de l'invention ne constitue pas une lentille ophtalmique progressive au sens classique de ce terme. L'invention ne propose pas une famille de lentilles, définies chacune par un couple base-addition. Au contraire, il suffit pour couvrir l'ensemble des prescriptions possibles de prévoir une seule surface asphérique, voire deux.

Dans le cas où l'on prévoit deux surfaces asphériques, l'une peut présenter une décroissance Θ ou une valeur Δ de l'ordre de 0,80 ou 0,60 dioptries, et l'autre une décroissance Θ ou une valeur Δ de l'ordre de 1,30 ou 0,95 dioptries. On arrive avec deux surfaces de ce type à couvrir l'ensemble des besoins des porteurs, mieux qu'avec les solutions de l'art antérieur.

La prescription des lentilles selon l'invention ne s'effectue pas nécessairement comme pour les lentilles progressives classiques, dans la mesure où l'on ne définit pas une famille de lentilles avec des additions différentes. Il suffit de déterminer la puissance optique nécessaire en vision de près, et d'usiner la face arrière de la lentille pour assurer cette puissance optique au point de vision de près. La puissance optique en vision intermédiaire est alors fixée. La lentille ne présente donc pas à proprement parler une zone de vision de loin qui serait adaptée à la puissance de chaque porteur.

Il n'est pas non plus indispensable pour une lentille selon l'invention de prévoir une rotation de la lentille au montage, comme dans les lentilles progressives anciennes à méridienne droite. On peut simplement monter la lentille de l'invention en disposant l'axe des ordonnées verticalement. La lentille peut être montée dans une monture de lunettes classique, ou encore dans une monture en demi-lune. Dans ce dernier cas, elle permet, par rapport au montage équivalent d'un verre unifocal, de diminuer le saut d'image au passage du regard sur le bord supérieur de la lentille.

La lentille de l'invention permet d'assurer une vision de près et une vision intermédiaire correctes, dans une plage de vision comprise au moins entre 40 et 80 cm, et dans la plupart des cas entre 40 cm et 2 m, qui couvre l'environnement nécessaire pour un travail sur ordinateur, et en particulier l'écran, le clavier et un document. La lentille ne fournit pas à proprement parler une zone de vision de loin bien définie, comme dans les lentilles ophtalmiques classiques. Elle suffit néanmoins pour couvrir les besoins de tous les presbytes pour un travail sur ordinateur, sans imposer l'apprentissage des verres progressifs.

Bien entendu, la présente invention n'est pas limitée aux exemples et modes de réalisation décrits et représentés, mais elle est susceptible de nombreuses variantes accessibles à l'homme de l'art. On pourrait ainsi utiliser une face arrière asphérique, et usiner la face avant, de façon classique.

Il est aussi clair que l'invention n'est pas limitée au mode de réalisation préféré et qu'il est possible de faire varier la décroissance de sphère moyenne sur la surface asphérique, ou d'utiliser plus de deux faces asphériques.

**Revendications**

1. Lentille ophtalmique, présentant une face asphérique ayant un centre géométrique, un point de référence pour la vision de près, et en chaque point une valeur de sphère moyenne et une valeur de cylindre, une méridienne sensiblement ombilique verticale, et dans laquelle l'aire formée des points dont la distance au centre géométrique est inférieure à 20 mm, et dont la valeur de cylindre est comprise entre une première valeur et une deuxième valeur est supérieure à l'aire formée des points dont la distance au centre géométrique est inférieure à 20 mm, et dont la valeur de cylindre est inférieure à ladite première valeur,

   la première valeur valant le produit d'une constante sensiblement égale à 0,42 par la différence Δ de sphère moyenne entre le point de référence pour la vision de près et le centre géométrique de la lentille,
   la seconde valeur valant le produit d'une constante sensiblement égale à 0,84 par la différence Δ de sphère moyenne entre le point de référence pour la vision de près et le centre géométrique de la lentille.

2. Lentille ophtalmique selon la revendication 1, **caractérisée en ce que** l'aire formée des points dont la distance au centre géométrique est inférieure à 20 mm, et dont la valeur de cylindre est supérieure à ladite deuxième valeur est d'une surface inférieure à 1/20 de l'aire formée des points dont la distance au centre géométrique est inférieure à 20 mm.

3. Lentille ophtalmique selon la revendication 1 ou 2, **caractérisée en ce que** le cylindre est inférieur à 0,12 dioptries pour les points de la méridienne dont l'ordonnée ou distance verticale par rapport au centre géométrique de la lentille est comprise entre -20 mm et +20 mm.

4. Lentille ophtalmique selon l'une des revendications 1 à 3, **caractérisée en ce que** la sphère moyenne est une fonction décroissante de l'ordonnée sur au moins une ligne verticale de la lentille, au dessus du point de référence pour la vision de près, et en particulier pour une ligne verticale passant par le centre optique de la lentille.

5. Lentille ophtalmique selon l'une des revendication 1 à 4, **caractérisée en ce que** l'aire formée des points dont la distance au centre géométrique est inférieure à 20 mm, et dont la valeur de cylindre est comprise entre lesdites première et deuxième valeurs est supérieure à 800 mm$^2$, lorsque la différence Δ de sphère moyenne entre le point de référence pour la vision de près et le centre géométrique de la lentille est de l'ordre de 0,60 dioptries.

6. Lentille ophtalmique selon l'une des revendications 1 à 5, **caractérisée en ce que** le point de référence pour la vision de près est situé sur la lentille à moins de 11 mm en dessous du centre géométrique de la lentille, et de préférence à 10 mm en dessous du centre géométrique de la lentille.

7. Lentille ophtalmique selon l'une des revendications 1 à 6, **caractérisée en ce que** l'aire S formée des points dont la distance au centre géométrique est inférieure à 20 mm, et dont la valeur de cylindre est comprise entre lesdites première et deuxième valeurs est comprise entre 780 et 880 mm$^2$.

8. Lentille selon l'une des revendications précédentes, **caractérisée en ce que** dans un cercle de diamètre de 8 mm centré sur le point de référence pour la vision de près, la valeur du cylindre en chaque point est inférieure à 0,37 dioptries.

9. Lentille selon l'une des revendications précédentes, **caractérisée en ce que** dans un cercle de diamètre de 8 mm centré sur le point de référence pour la vision de près, la variation de la sphère moyenne est inférieure à 0,25 dioptries.

10. Lentille ophtalmique selon l'une des revendications précédentes, **caractérisée en ce que** la valeur absolue du gradient de la sphère moyenne sur la surface asphérique est inférieure au produit d'une constante $k_S$ par la différence $\Delta$ de sphère moyenne entré le point de référence pour la vision de près et le centre géométrique de la lentille, ladite constante ks présentant une valeur comprise entre 0,10 et 0,15 mm$^{-1}$, et de préférence égale à 0,14 mm$^{-1}$.

11. Lentille ophtalmique selon l'une des revendications précédentes, **caractérisée en ce que** la valeur absolue du gradient du cylindre sur la surface asphérique est inférieure au produit d'une constante kc par la différence $\Delta$ de sphère moyenne entre le point de référence pour la vision de près et le centre géométrique de la lentille, ladite constante kc présentant une valeur comprise entre 0,18 et 0,22 mm$^{-1}$, et de préférence égale à 0,21 mm$^{-1}$.

12. Lentille ophtalmique selon l'une des revendications précédentes, **caractérisée en ce que** les points de la face asphérique dont la distance au centre géométrique est inférieure à 20 mm et qui sont situés en dessous d'une ligne horizontale passant à 4 mm sous le centre géométrique de la lentille présentent un cylindre inférieur à ladite deuxième valeur.

13. Lentille ophtalmique selon l'une des revendications précédentes, **caractérisée en ce que** les lignes formées des points de la face asphérique dont l'ordonnée ou distance verticale au centre géométrique de la lentille est supérieure à 8 mm, et dont la valeur de cylindre est égale à ladite première valeur sont sensiblement parallèles.

14. Lentille ophtalmique selon la revendication 13, **caractérisée en ce que** lesdites lignes sont sensiblement verticales.

## Patentansprüche

1. Ophthalmische Linse mit einer asphärischen Fläche, die über eine geometrische Mitte, einen Referenzpunkt für die Nahsicht und an jedem Punkt über einen Wert der mittleren Flächenbrechkraft sowie einen Wert des Flächenastigmatismus bzw. Zylinders und über einen im wesentlichen vertikalen ombilischen Meridian verfügt, wobei die Fläche bzw. der Bereich, gebildet aus Punkten, deren Abstand an der geometrischen Mitte geringer ist als 20 mm und deren Flächenastigmatismuswert enthalten ist zwischen einem ersten Wert und einem zweiten Wert, größer ist als die Fläche bzw. der Bereich, gebildet aus Punkten, deren Abstand zur geometrischen Mitte kleiner ist als 20 mm und deren Flächenastigmatismuswert bzw. Zylinderwert kleiner ist als der erste Wert, wobei der erste Wert dem Produkt aus einer Konstante, die praktisch gleich ist zu 0,42, mit der Differenz $\Delta$ der mittleren Flächenbrechkraft zwischen dem Referenzpunkt für die Nahsicht und der geometrischen Mitte der Linse entspricht, wobei der zweite Wert dem Produkt aus einer Konstante, die praktisch gleich ist zu 0,84, mit der Differenz $\Delta$ der mittleren Flächenbrechkraft zwischen dem Referenzpunkt für die Nahsicht und der geometrischen Mitte der Linse entspricht.

2. Ophthalmische Linse nach Anspruch 1, **dadurch gekennzeichnet**, daß die Fläche bzw. der Bereich, gebildet aus Punkten, deren Abstand zur geometrischen Mitte kleiner oder geringer ist als 20 mm und deren Flächenastigmatismuswert größer ist als der zweite Wert, eine Fläche ist, die geringer ist als 1/20 des Bereiches bzw. der Fläche, die gebildet ist aus Punkten, deren Abstand zur geometrischen Mitte kleiner ist als 20 mm.

3. Ophthalmische Linse nach Anspruch 1 oder 2, **dadurch gekennzeichnet**, daß der Flächenastigmatismus kleiner ist als 0,12 Dioptrie für die Punkte des Meridians, deren Ordinate oder vertikaler Abstand mit Bezug auf die geometrische Mitte der Linse, enthalten ist zwischen -20 mm und + 20mm.

4. Ophthalmische Linse nach einem der Ansprüche 1 bis 3, **dadurch gekennzeichnet**, daß die mittlere Flächenbrechkraft eine abnehmende Funktion der Ordinate auf zumindest einer vertikalen Linie der Linse oberhalb des Refernzpunktes für die Nahsicht ist, insbesondere für eine vertikale Linie, die durch die optische Mitte der Linse tritt.

5. Ophthalmische Linse nach einem der Ansprüche 1 bis 4, **dadurch gekennzeichnet**, daß der Bereich, gebildet aus Punkten, deren Abstand zur geometrischen Mitte geringer oder kleiner als 20 mm ist und deren Flächenastigmatismus- bzw. Zylinderwert enthalten ist zwischen den ersten und zweiten Werten, größer ist als 800 mm$^2$, wenn die Differenz $\Delta$ der mittleren Flächenbrechkraft zwischen dem Referenzpunkt für die Nahsicht und der geometrischen Mitte der Linse in der Größenordnung von 0,60 Dioptrien liegt.

6. Ophthalmische Linse nach einem der Ansprüche 1 bis 5, **dadurch gekennzeichnet**, daß der Referenzpunkt für die Nahsicht an der Linse bei zumindest 11 mm unterhalb der geometrischen Mitte der Linse, und insbesondere bei 10 mm unterhalb der geometrischen Mitte der Linse angeordnet ist.

7. Ophthalmische Linse nach einem der Ansprüche 1 bis 6, **dadurch gekennzeichnet**, daß der Bereich, gebildet aus Punkten, deren Abstand zur geometrischen Mitte geringer als 20 mm ist, und deren Wert des Flächenastigmatismus bzw. Zylinders enthalten ist zwischen den ersten und zweiten Werten, zwischen 780 und 880 mm$^2$ ausmacht.

8. Linse nach einem der vorangegangenen Ansprüche, **dadurch gekennzeichnet**, daß in einem Kreis mit Durchmesser von 8 mm, mittig bzw. zentriert an dem Referenzpunkt für die Nahsicht, der Wert des Flächenastigmatismus bei jedem Punkt geringer ist als 0,37 Dioptrien.

9. Linse nach einem der vorangegangenen Ansprüche, **dadurch gekennzeichnet**, daß in einem Kreis mit einem Durchmesser von 8 mm, zentriert bezüglich des Referenzpunktes für die Nahsicht, die Veränderung der mittleren Flächenbrechkraft kleiner oder geringer ist als 0,25 Dioptrien.

10. Ophthalmische Linse nach einem der vorangegangenen Ansprüche, **dadurch gekennzeichnet**, daß der Absolutwert des Gradienten der mittleren Flächenbrechkraft an der asphärischen Fläche kleiner ist als das Produkt einer Konstanten $k_S$ mit der Differenz $\Delta$ der mittleren Flächenbrechkraft zwischen dem Referenzpunkt für die Nahsicht und der geometrischen Mitte der Linse, wobei die Konstante $k_S$ einen Wert aufweist, enthalten zwischen 0,10 und 0,15 mm$^{-1}$, und insbesondere gleich ist zu 0,14 mm$^{-1}$.

11. Ophthalmische Linse nach einem der vorangegangenen Ansprüche, **dadurch gekennzeichnet**, daß der Absolutwert des Gradienten des Flächenastigmatismus an der asphärischen Fläche bzw. Oberfläche kleiner ist als das Produkt einer Konstanten $k_c$ mit der Differenz $\Delta$ der mittleren Flächenbrechkraft zwischen dem Referenzpunkt für die Nahsicht und der geometrischen Mitte der Linse, wobei die Konstante $k_c$ einen Wert aufweist, enthalten zwischen 0,18 und 0,22 mm$^{-1}$, und insbesondere gleich ist zu 0,21 mm$^{-1}$.

12. Ophthalmische Linse nach einem der vorangegangenen Ansprüche, **dadurch gekennzeichnet**, daß die Punkte der asphärischen Fläche, deren Abstand zur geometrischen Mitte kleiner als 20 mm ist und die sich unterhalb einer horizontalen Linie befinden, die bei 4 mm unter der geometrischen Mitte der Linse verläuft, einen Flächenastigmatismus bzw. Zylinder zeigen, der geringer als der zweite Wert ist.

13. Ophthalmische Linse nach einem der vorangegangenen Ansprüche, **dadurch gekennzeichnet**, daß die Linien, gebildet aus Punkten der asphärischen Fläche, deren Ordinate oder vertikaler Abstand zur geometrischen Mitte der Linse größer als 8 mm ist und deren Flächenastigmatismuswert gleich ist zu dem ersten Wert, im wesentlichen parallel verlaufen.

14. Ophthalmische Linse nach Anspruch 13, **dadurch gekennzeichnet**, daß die Linien im wesentlichen vertikal verlaufen.

**Claims**

1. An ophthalmic lens with an aspherical face, having a geometrical center, a near vision reference point and at every point a value of mean sphere and a value of cylinder, a substantially umbilical vertical meridian, and in which a surface area defined by points at a distance from a geometrical center of said lens less than 20 mm, and for which a value of cylinder is comprised between a first value and a second value, is larger than a surface area defined by points at a distance of less than 20 mm from said geometrical center, and for which a value of cylinder is less than said first value,

   said first value being equal to the product obtained by multiplying a constant substantially equal to 0.42 by the difference $\Delta$ in mean sphere between a close vision control point and said geometrical center of the lens,
   said second value being equal to the product obtained by multiplying a constant substantially equal to 0.84 by the difference $\Delta$ in mean sphere between a close vision reference point and said geometrical center of said lens.

2. The ophthalmic lens according to claim 1, wherein a surface area defined by points at a distance of less than 20 mm from said geometrical center and for which cylinder is greater than said second value, is a surface area making up less than 1/20th of a surface area formed by points for which their distance from said geometrical center is less than 20 mm.

3. The ophthalmic lens according to claim 1 or 2, wherein, for points of said meridian having a y-axis coordinate, or vertical distance with respect to said geometrical center of the lens, comprised between -20 mm and +20 mm, cylinder has a value of less than 0.12 diopter.

4. The ophthalmic lens according to one of claims 1 to 3, wherein mean sphere is a decreasing function of y-axis coordinate on at least one vertical line of said lens, above a close vision reference point and in particular, for a vertical line passing through an optical center of said lens.

5. The ophthalmic lens according to one of claims 1 to 4, wherein a surface area defined by points having a distance from said geometrical center of less than 20 mm and for which a value of cylinder is comprised between said first and second values, is greater than 800 mmy when a difference $\Delta$ in mean sphere between said close vision reference point and said geometrical center of the lens is of the order of 0.60 diopter.

6. The ophthalmic lens according to one of claims 1 to 5, wherein said close vision reference point is located on said lens at less than 11 mm below said geometrical center of the lens and, preferably, at 10 mm below said geometrical center of the lens.

7. The ophthalmic lens according to one of claims 1 to 6, wherein a surface area S defined by points having a distance of less than 20 mm from said geometrical center and for which a value of cylinder is comprised between said first and second values, is comprised between 780 and 880 mmy.

8. The lens according to one of the preceding claims, wherein within a 8 mm diameter circle centered on said close vision reference point, cylinder at every point is less than 0.37 diopters.

9. The lens according to one of the preceding claims, wherein within a 8 mm diameter circle centered on said close vision reference point, variation in mean sphere is less than 0.25 diopters.

10. The ophthalmic lens according to one of the preceding claims, wherein an absolute value of gradient of mean sphere on said aspherical surface is less than the product of multiplying a constant $k_S$ by a difference $\Delta$ in mean sphere between said close vision reference point and said geometrical center of the lens, the value of said constant $k_S$ being comprised between 0.10 and 0.15 mm$^{-1}$, and is preferably equal to 0.14 mm$^{-1}$.

11. The ophthalmic lens according to one of the preceding claims, wherein an absolute value of gradient of cylinder on said aspherical surface is less than a product of multiplying a constant $k_C$ by a difference $\Delta$ in mean sphere between said close vision reference point and said geometrical center of the lens, said constant $k_C$ having a value comprised between 0.18 and 0.22 mm$^{-1}$ and preferably has a value of 0.21 mm$^{-1}$.

12. The ophthalmic lens according to one of the preceding claims, wherein points of said aspherical face situated at a distance of less than 20 mm from said geometrical center and which are below a horizontal line situated 4 mm below said geometrical center of the lens have a cylinder that is less than said second value.

13. The ophthalmic lens according to one of the preceding claims, wherein lines defined by points on said aspherical face having a y-axis coordinate or vertical distance from said geometrical center of the lens greater than 8 mm, and for which cylinder is equal to said first value, are substantially parallel.

14. The ophthalmic lens according to claim 13, wherein said lines are substantially vertical.

figure 1

X en mm

Y en mm

1

2

3

4

figure 2

X en mm

Y en mm

13

12

11

0.50

figure 3

X en mm

figure 4.

figure 5

figure 6